# EUROPEAN PATENT APPLICATION

(11) **EP 3 316 108 A1**
(43) Date of publication of application: **02.05.2018**
(21) Application number: 15895890.0
(22) Date of filing: 23.06.2015
(51) Int. Cl.: G06F 3/0488

(54) **METHOD OF DISPLAYING DIVIDED SCREEN, AND ELECTRONIC DEVICE**

(71) Applicant: Shenzhen Royole Technologies Co. Ltd., Shenzhen, Guangdong 518052 (CN)
(72) Inventor: WANG, Ji, Shenzhen Guangdong 518052 (CN); LIU, Zihong, Shenzhen Guangdong 518052 (CN)
(74) Representative: Hamer, Christopher K.
(86) International application number: PCT/CN2015/082024
(87) International publication number: WO 2016/205990

(57) **Abstract**

A split-screen display method and an electronic device are provided. The method includes: detecting a split-screen instruction, and acquiring a split-screen trajectory based on the split-screen instruction; dividing a display screen into multiple split-screen display regions according to the split-screen trajectory, and generating display data based on display contents of the multiple split-screen display regions; buffering the display data; driving the multiple split-screen display regions to display the display data. By the provided split-screen display method and electronic device implementing the method, a display screen can be divided into multiple split-screen display regions according to a split-screen trajectory, and then display data can be generated based on display contents of the multiple split-screen display regions and supplied to a display module for display. Thus, the display module can display multiple feeds of display contents at the same time, providing enhanced display effects.

## Description

### TECHNICAL FIELD

The present disclosure relates to techniques of split-screen display, and more particularly to a split-screen display method and an electronic device implementing the method.

### BACKGROUND

Electronic devices now are carrying richer resources and using all kinds of application software to provide convenient electronic informational services regarding almost all aspects of people's lives to meet the growing life, entertainment, and other demands. But, on the display screen of the electronic device only one application can be displayed and operated at a time. If a user wants to use other applications other than the current application, the user needs to exit the currently displayed application interface to switch to a parent interface which an application icon included to be used is shown, and then click the application icon to start the selected application, which displays in a full screen to provide further operations.

In view of the problems mentioned above, the related art proposes a solution that a shortcut menu is provided for applications running in the background. The shortcut menu can be called out by triggering an associated key and displayed in a partial area of the current application interface. So the user can select a background application icon to start the corresponding application. While this method eliminates operations of exiting the current application interface to a parent interface and searching the parent interface of the application icon the user wishes to use, the shortcut menu only provides launcher icons for applications running in the background, which means, in other words, once an application icon is selected, the screen would turn to a display interface of the selected application. As such, the display screen is still not able to display multiple applications at the same time.

In view of the above, the present disclosure provides a split-screen display method and an electronic device implementing the method.

### SUMMARY

Embodiments of the disclosure provide a split-screen display method. The method includes: detecting a split-screen instruction and acquiring a split-screen trajectory according to the split-screen instruction detected; dividing a display screen into a plurality of split-screen display regions according to the split-screen trajectory, and generating display data based on display contents of the plurality of split-screen display regions; buffering the display data; and driving the plurality of split-screen display regions to display the display data.

Embodiments of the disclosure further provide an electronic device that includes: a detection module configured to detect a split-screen instruction and acquire a split-screen trajectory according to the split-screen instruction detected; a split-screen module configured to divide a display screen into a plurality of split-screen display regions according to the split-screen trajectory, generate display data based on display contents of the plurality of split-screen display regions, and send the display data to a buffer module; and the buffer module configured to buffer the display data for output and display.

With the split-screen display method and the electronic device implementing the method that are provided by embodiments of the disclosure, the display screen can be divided into a plurality of split-screen display regions according to a split-screen trajectory, and display data can be generated based on the display contents of different split-screen display regions and fed to a display module for display. Thus, the display module can display multiple feeds of display contents at the same time, providing enhanced display effects.

### BRIEF DESCRIPTION OF THE DRAWINGS

The following drawings are used in connection with specific implementations to illustrate in detail the various embodiments of the disclosure. It will be appreciated that various elements shown in these drawings are not representative of their actual sizes and are not to scale. In fact, these drawings are merely schematics intended for illustrative purposes. Therefore, they should not be construed as limiting of the disclosure. In the drawings:
FIG.1 illustrates a block diagram of an electronic device in accordance with an embodiment of the disclosure.
FIG.2 illustrates an example of split-screen display regions in accordance with an embodiment of the disclosure.
FIG.3 illustrates another example of split-screen display regions in accordance with an embodiment of the disclosure.
FIG.4 illustrates a block diagram of an electronic device in accordance with a first implementation of the disclosure.
FIG.5 illustrates a block diagram of an electronic device in accordance with a second implementation of the disclosure.
FIG.6 illustrates a block diagram of an electronic device in accordance with a third implementation of the disclosure.
FIG.7 illustrates a flowchart of a split-screen display method in accordance with a first embodiment of the disclosure.
FIG.8 illustrates a flowchart of a split-screen display method in accordance with a second embodiment of the disclosure.
FIG. 9 illustrates a flowchart of a split-screen display method in accordance with a third embodiment of the disclosure.

### DETAILED DESCRIPTION OF ILLUSTRATED EMBODIMENTS

To provide a better understanding of the objects, technical solutions and advantages of the disclosure, herein below the present disclosure will be described in further detail with reference to various embodiments and the accompanying drawings. It will be appreciated that the specific embodiments described herein are merely illustrative of and are not intended to limit the disclosure.

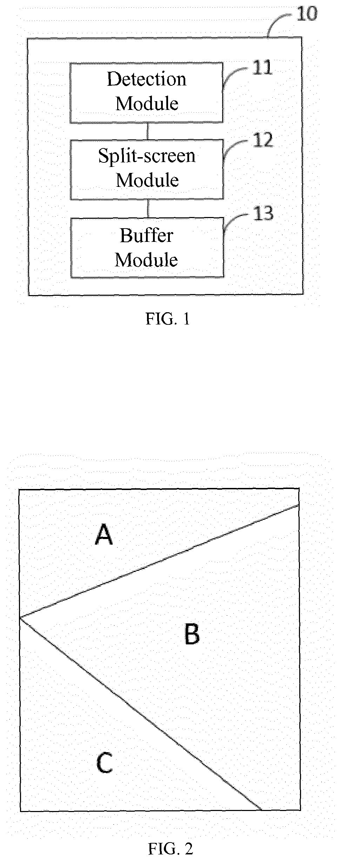

FIG.1 illustrates an electronic device implementing a split-screen display method in accordance with an embodiment of the disclosure. As illustrated in the figure, the electronic device 10 includes a detection module 11, a split-screen module 12, and a buffer module 13. It should be noted that, the term "module" used herein may refer to software, hardware, or a combination thereof.

The detection module 11 is configured to detect a split-screen instruction and acquire a split-screen trajectory according to the split-screen instruction. In particular, the triggering of the split-screen instruction includes, but is not limited to, triggering of a physical key, triggering upon detection of a touch signal detected by a touch device, triggering upon detection of a motion signal of a target feature detected by an infrared device, and the like. For example, the split-screen instruction may be triggered when pressing or toggling of a preset physical key is detected, and accordingly, the split-screen trajectory can be a split-screen trajectory that is preset by the system or a user and can be acquired in associate with the preset physical key When the electronic device has a touch screen or a touchpad, the split-screen instruction may be triggered by the detection of a gesture operation, and accordingly, the split-screen trajectory may be acquired by directly extracting a touch path from the user's gesture operation. In this manner, the split-screen instruction may also be a combination of a touch instruction and a gesture operation. For example, the system may start acquiring a touch gesture of the user after a preset area or a function key is touched, and then may convert the touch gesture to the split-screen trajectory. When the electronic device has a sensing device such as an infrared sensor, the electronic device can sense an action of the user, and when the action matches and so triggers a preset split-screen instruction, the split-screen trajectory that is preset by the system or the user would be called up; when the action contains a trajectory that divides the display screen, the user's action path can be directly converted to obtain the split-screen trajectory. The split-screen instruction may include one or more touch paths or action paths that can be converted into split-screen trajectories.

The split-screen module 12 is configured to divide the display screen into multiple split-screen display regions according to the split-screen trajectory, generate display data based on display contents of the multiple split-screen display regions, and send the display data to the buffer module 13.

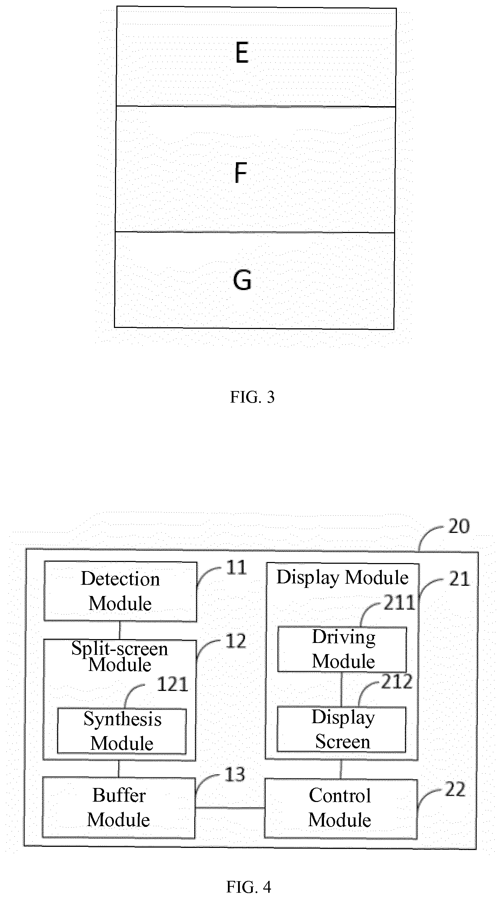

In particular, the display area of the display screen may be divided into multiple split-screen display regions according to the split-screen trajectory acquired by the detection module 11, where the specific number of the split-screen display regions may depend on the split-screen trajectory. For example, when the split-screen instruction detected by the detection module 11 includes a continuous path, as illustrated in FIG.2, then the detection module 11 may acquire the corresponding split-screen trajectory based on the continuous path, and the split-screen module 12 may divide the display area into three split-screen display regions A, B, and C, according to the split-screen trajectory. As another example, when the split-screen instruction detected by the detection module 11 includes multiple paths, as illustrated in FIG.3 where two paths are illustrated in this example shown, then the detection module 11 may acquire the corresponding split-screen trajectory based on these two paths included in the split-screen instruction, and the split-screen module 12 may divide the display area into three split-screen display regions E, F, and G, according to the split-screen trajectory. The split-screen module may further generate display data for a full display area based on the split-screen display regions divided and corresponding display contents of each region.

The buffer module 13 is configured to buffer the display data for output to display. In particular, the buffer module 13 may be one or more physical areas used to store the display data of screen images. For example, the display data may be stored in one or more areas of a memory, so the electronic device can extract and feed the display data to a display module for display. The display module may be included in the electronic device or in any other electronic device that has a display module and is in a wired or wireless connection with the electronic device.

The electronic device 10 provided by this embodiment of the disclosure can divide a display screen into multiple split-screen display regions according to a split-screen trajectory, generate display data based on display contents of different split-screen display regions, and provide the display data to a display module for display. Thus, the display module can display multiple feeds of display contents at the same time, which increases the amount of display contents and provides enhanced display effects.

The present disclosure further provides a first implementation based on the above embodiment of the electronic device 10, see the electronic device 20 illustrated in FIG.4. The generation of display data based on display contents of different split-screen display regions divided by the split-screen module 12 can be realized by a synthesis module 121. The synthesis module 121 can synthesize the display contents of the multiple split-screen display regions into first display data. The first display data may include one frame of display data encompassing the display contents of all the split-screen display regions. In particular, the electronic device 20 may further include a display module 21 for driving the multiple split-screen display regions to display the display data buffered in the buffer module 13. In this manner, the buffer module 13 may be an area in the memory. The display module 21 may output to display area a complete synthesized image of the multiple split-screen display regions based on the display data in the buffer module 13.

Typically, the electronic device 20 may further include a control module 22 that extracts the display data from the buffer module 13 according to time series and sends the display data to the display module 21. More particularly, the control module 22 may be a module in a main processor (CPU) of the electronic device 20, and may process the display data in the buffer module 13, such as rotating, scaling, PQ (picture quality) adjusting, and the like. The display data in the buffer module 13 may finally be sent to the display module 21 over a bus responsible for transmission of the display data, according to certain time series. The display module 21 may specifically include a driving module 211 and a display screen 212. The driving module 211 can parse the display data transferred over the bus and generate a level signal to drive the display screen 212 to display according to certain display time series.

This implementation can be implemented by software without changing the hardware configuration. It should be appreciated that the above-mentioned transmission includes wired and wireless transmission. When the electronic device is an integrated electronic device including a display module, such as a phone, a PAD, an all-in-one machine, etc. with a display screen, the display data can be transferred through the bus. Otherwise when the electronic device does not include a display module, such as a set-top box, an internet multimedia processing terminal, and the like without a display screen, the display data may be wirelessly transmitted to other electronic devices having a display module such as a television, a display, and the like, in this case, the electronic device would include a wireless communication module. Since the wireless transmission is a well-known technology to those skilled in the art, it is not to be discussed in further detail herein.

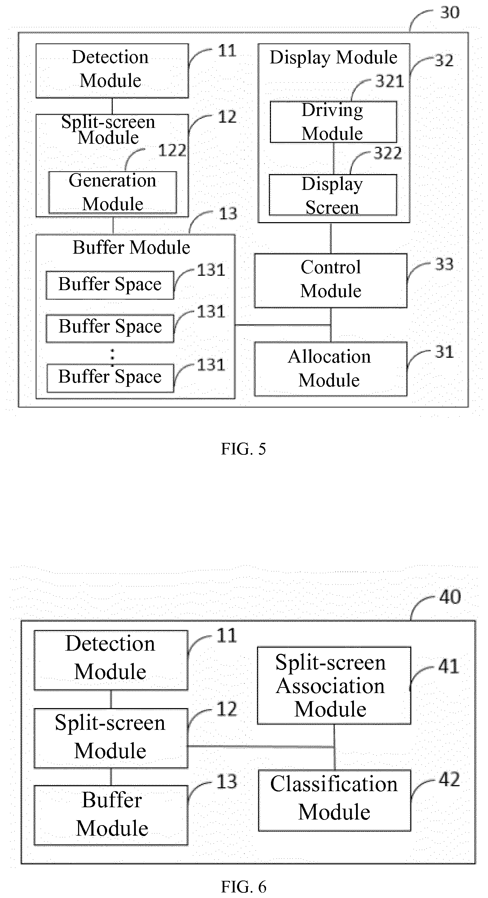

The present disclosure further provides a second implementation based on the above embodiment of the electronic device 10, see the electronic device 30 illustrated in FIG.5. The generation of display data based on display contents of different split-screen display regions divided by the split-screen module 12 can be achieved by using a generation module 122 to generate second display data based on display contents of each of the multiple split-screen display regions respectively. The second display data may contain one frame of display data associated with the display contents of a corresponding split-screen display region.

In particular, the electronic device 30 may include an allocation module 31. The allocation module 31 can dynamically allocate the buffer module 13 to generate buffer spaces 131 according to the split-screen display regions divided by the split-screen module 12, each of the buffer spaces 131 is associated with a split-screen display region, and the allocation module 31 buffers the display data of each split-screen display region to the corresponding buffer space 131. For example, the split-screen module 12 divides the display screen into a number of *N* split-screen display regions, and the allocation module 31 allocates *N* buffer spaces 131 according to the *N* split-screen display regions. Accordingly, the split-screen module 12 may generate second display data for the display contents of each of the *N* split-screen display regions respectively. Thus, *N* pieces of second display data are generated in total, and are respectively stored to their corresponding buffer spaces 131.

The display module 32 is configured to drive the multiple split-screen display regions to display the display data according to the second display data in the buffer spaces. More particularly, the display module 32 may refresh a corresponding split-screen display region upon reception of a piece of second display data.

The control module 33 is configured to sequentially extract and transmit the second display data of each buffer space 131 to the display module 32.

As one implementation, the control module 33 may sequentially, for example, poll each buffer space 131 or detect that new second display data is stored in a buffer space 131, and then the control module 33 may extract the second display data from the buffer space, and, in addition, add a transmission control signal to the second display data. The transmission control signal may contain positional information, such as coordinate information, an area identifier, etc. of the corresponding split-screen display region. The second display data with the transmission control signal may then be sent to the display module 32. A driving module 321 of the display module 32 may refresh the split-screen display region corresponding to the second display data in accordance with the transmission control signal, and the split-screen display regions not associated with the second display data may not be refreshed and thus maintain their display contents displayed on a display screen 322.

The present disclosure further provides a third implementation based on the above embodiment of the electronic device 10, see the electronic device 40 illustrated in FIG.6. The electronic device 40 further includes a split-screen association module 41. The split-screen association module 41 can associate each split-screen display region with corresponding display contents, according to multiple split-screen display regions divided by the split-screen module 12 and preset association rules. The association rules can be preset by the system, for example, initial display contents of all the split-screen display regions may be considered as a parent interface (main interface), or the current display contents may be associated with one split-screen display region while display contents of other split-screen display regions serve as the parent interface, but the association rules of the disclosure are not limited thereto, and may also be user-defined association rules.

As one implementation of the association rules, the electronic device 40 may further include a classification module 42. The classification module 42 can create multiple categories according to preset classification rules and associate each category with corresponding applications. For example, the applications included in the electronic device can be categorized based on their types into different categories such as communications, games, multimedia, office, shopping, and the like. The classification rules can be user-defined or preset by the system. In this manner, the split-screen association module 41 may associate each of the multiple split-screen display regions divided by the split-screen module 12 with display contents of one category respectively. The display contents of this category may include interfaces of all applications included in this category. Furthermore, the association rules may include allocation rules of a specific category, for example, the multiple categories may be allocated to the split-screen display regions in descending order of frequency of usage.

It should be appreciated that the present embodiment is merely used to describe the principle of association rules that perform allocation and association on the multiple split-screen display regions based on a descending order of the frequency of usage, instead of limiting the association rules of the disclosure to those described. Nevertheless, the association rules that can be implemented by those skilled in the art based on the principle of this embodiment shall all fall in the scope of the disclosure.

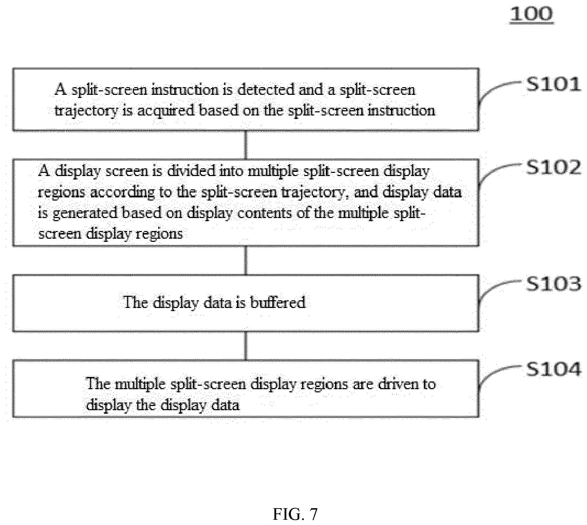

FIG.7 is a flowchart of a split-screen display method provided by a first embodiment of the disclosure. Method 100 may include the following operations.

At S101, a split-screen instruction is detected and a split-screen trajectory is acquired based on the split-screen instruction.

At S102, a display screen is divided into multiple split-screen display regions according to the split-screen trajectory, and display data is generated based on display contents of the multiple split-screen display regions.

At S103, the display data is buffered.

At S104, the multiple split-screen display regions are driven to display the display data.

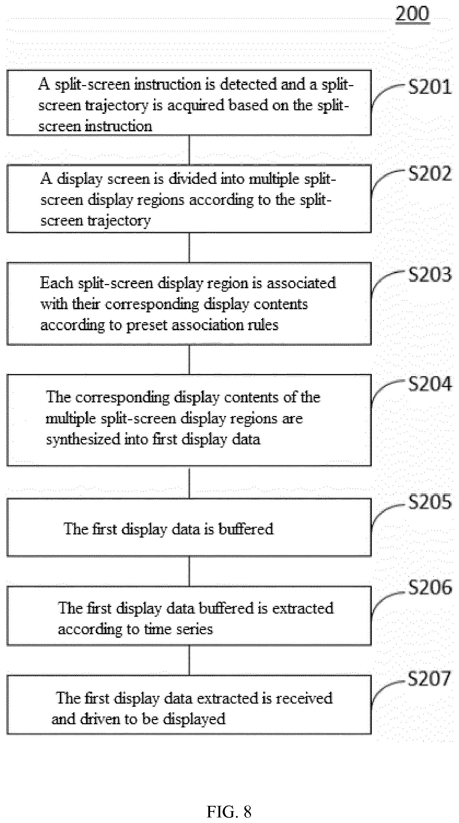

FIG.8 is a flowchart of a split-screen display method provided by a second embodiment of the disclosure. Method 200 may include the following operations.

At S201, a split-screen instruction is detected and a split-screen trajectory is acquired based on the split-screen instruction.

At S202, a display screen is divided into multiple split-screen display regions according to the split-screen trajectory.

At S203, each split-screen display region is associated with their corresponding display contents according to preset association rules.

At S204, the corresponding display contents of the multiple split-screen display regions are synthesized into first display data.

At S205, the first display data is buffered.

At S206, the first display data buffered is extracted according to time series.

At S207, the first display data extracted is received and driven to be displayed.

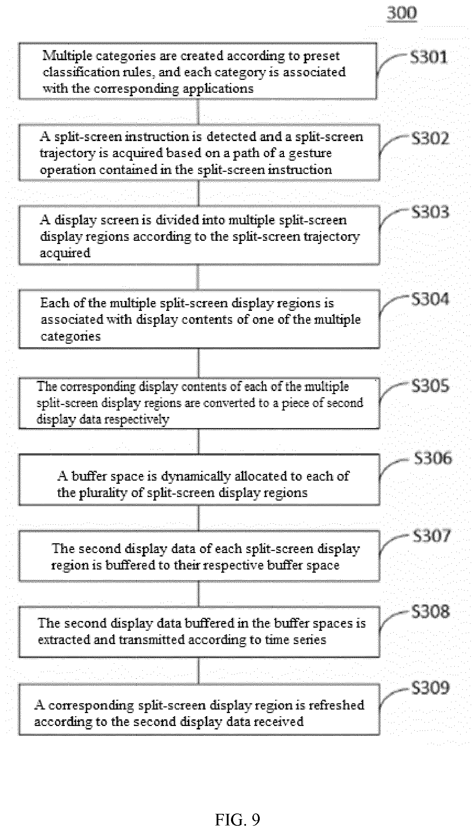

FIG.9 is a flowchart of a split-screen display method provided by a third embodiment of the disclosure. Method 300 includes the following operations.

At S301, multiple categories are created according to preset classification rules, and each category is associated with the corresponding applications.

At S302, a split-screen instruction is detected and a split-screen trajectory is acquired based on a path of a gesture operation contained in the split-screen instruction.

At S303, a display screen is divided into multiple split-screen display regions according to the split-screen trajectory acquired.

At S304, each of the multiple split-screen display regions is associated with display contents of one of the multiple categories.

At S305, the corresponding display contents of each of the multiple split-screen display regions are converted to a piece of second display data respectively.

At S306, a buffer space is dynamically allocated to each of the plurality of split-screen display regions, wherein buffer spaces allocated and the plurality of split-screen display regions are in one-to-one correspondence.

At S307, the second display data of each split-screen display region is buffered to their respective buffer space.

At S308, the second display data buffered in the buffer spaces is extracted and transmitted according to time series.

At S309, a corresponding split-screen display region is refreshed according to the second display data received.

Note the operations from S304 to S306 of this embodiment will not be limited to the execution order described above, and in other embodiments they may be performed in any other possible order. The various steps of the methods of displaying a split screen provided by the first through third embodiments described above correspond to embodiments and implementations of the electronic device described above. Since these methods share the same principles with the embodiments and implementations of the electronic device described above, they are not to be described in further detail herein.

The foregoing description merely depicts some exemplary embodiments of the disclosure, which however are not intended to limit the disclosure. Any modifications, equivalent substitutions, or improvements made thereto without departing from the spirits and principles of the disclosure shall all be encompassed within the protection of the disclosure.

## Claims

1. A split-screen display method, comprising:
detecting a split-screen instruction and acquiring a split-screen trajectory based on the split-screen instruction detected;
dividing a display screen into a plurality of split-screen display regions according to the split-screen trajectory and generating display data based on display contents of the plurality of split-screen display regions;
buffering the display data; and
driving the plurality of split-screen display regions to display the display data.

2. The method of claim 1, wherein generating the display data comprises:
synthesizing the display contents of the plurality of split-screen display regions into first display data.

3. The method of claim 1, wherein generating the display data comprises:
generating second display data based on display contents of each of the plurality of split-screen display regions respectively.

4. The method of claim 3, wherein driving the plurality of split-screen display regions to display the display data comprises:
refreshing a corresponding split-screen display region according to the second display data received.

5. The method of claim 3, further comprising:
allocating dynamically a buffer space for each of the plurality of split-screen display regions, wherein buffer spaces allocated and the plurality of split-screen display regions are in one-to-one correspondence; and
wherein buffering the display data comprises buffering the second display data of each of the plurality of split-screen display regions to a corresponding buffer space.

6. The method of any of claims 1 to 5, further comprising, prior to driving the plurality of split-screen display regions to display the display data:
extracting the buffered display data according to time series.

7. The method of claim 1, further comprising, prior to generating the display data:
associating each of the plurality of split-screen display regions with corresponding display contents, according to preset association rules.

8. The method of claim 7, further comprising:
creating a plurality of categories according to preset classification rules and associating each of the plurality of categories with corresponding applications;
wherein associating each of the plurality of split-screen display regions with the corresponding display contents comprises: associating each of the plurality of split-screen display regions with display contents of one of the plurality of categories.

9. The method of any of claims 1 to 5 and claims 7 to 8, wherein the split-screen instruction comprises a gesture operation, and wherein acquiring the split-screen trajectory based on the split-screen instruction comprises: acquiring the split-screen trajectory based on a path of the gesture operation.

10. An electronic device, comprising:
a detection module, configured to detect a split-screen instruction and acquire a split-screen trajectory based on the split-screen instruction detected;
a split-screen module, configured to divide a display screen into a plurality of split-screen display regions according to the split-screen trajectory, generate display data based on display contents of the plurality of split-screen display regions, and send the display data to a buffer module; and
the buffer module, configured to buffer the display data for output to display.

11. The electronic device of claim 10, wherein the split-screen module comprises a synthesis module, the synthesis module is configured to synthesize the display contents of the plurality of split-screen display regions into first display data.

12. The electronic device of claim 10 or 11, further comprising:
a display module, configured to drive the plurality of split-screen display regions to display the display data buffered in the buffer module.

13. The electronic device of claim 12, further comprising:
a control module, configured to extract the display data buffered in the buffer module according to time series and send the display data received to the display module.

14. The electronic device of claim 10, wherein the split-screen module comprises a generation module, the generation module is configured to generate second display data based on display contents of each of the plurality of split-screen display regions.

15. The electronic device of claim 14, further comprising:
an allocation module, configured to dynamically designate the buffer module to allocate a buffer space for each of the plurality of split-screen display regions divided by the split-screen module, wherein buffer spaces allocated and the plurality of split-screen display regions are in one-to-one correspondence; and wherein the buffer module is further configured to buffer the second display data of each of the plurality split-screen display regions to a corresponding buffer space.

16. The electronic device of claim 15, further comprising:
a display module, configured to drive the plurality of split-screen display regions to display the display data according to the second display data in the buffer spaces.

17. The electronic device of claim 16, further comprising:
a control module, configured to sequentially extract and send the second display data from the buffer spaces to the display module.

18. The electronic device of claim 17, wherein the control module is further configured to:
add a transmission control signal to the second display data extracted, the transmission control signal comprising information of a split-screen display region corresponding to the second display data; and
send the second display data with the transmission control signal to the display module.

19. The electronic device of claim 18, wherein the display module further comprises a driving module configured to determine a split-screen display region corresponding to the second display data based on the transmission control signal received and refresh the corresponding split-screen display region according to the second display data.

20. The electronic device of claim 10, further comprising:
a split-screen association module, configured to associate each of the plurality of split-screen display regions divided by the split-screen module with corresponding display contents, according to preset association rules.

21. The electronic device of claim 20, further comprising:
a classification module, configured to create a plurality of categories according to preset classification rules and associate each of the plurality of categories with corresponding applications; and wherein the split-screen association module is configured to associate each of the plurality of split-screen display regions divided by the split-screen module with the display contents of one of the plurality of categories.
